# EUROPEAN PATENT SPECIFICATION

(11) **EP 3 537 871 B1**
(45) Date of publication and mention of the grant of the patent: **03.07.2024**
(21) Application number: 17804962.3
(22) Date of filing: 13.11.2017
(51) Int. Cl.: A01G 25/14, F16L 33/01, F16L 11/12, F16L 33/22

(54) **ASSEMBLY FOR IRRIGATION**
ZUSAMMENFÜGEN FÜR DIE BEWÄSSERUNG
ASSEMBLAGE POUR IRRIGATION

(30) Priority: 14.11.2016 IT 201600114402
(43) Date of publication of application: 18.09.2019
(73) Proprietor: G.F. S.r.l., 42015 Correggio (Reggio Emilia) (IT)
(72) Inventor: RIGHI, Cesare Mattia, 41017 Ravarino (Modena) (IT)
(74) Representative: Gagliardelli, Fabrizio
(86) International application number: PCT/IB2017/057063
(87) International publication number: WO 2018/087722

(56) References cited:
- WO-A1-2015/073327
- WO-A1-2016/128940
- FR-A- 1 244 793
- US-A1- 2013 087 205
- US-A1- 2015 308 590

## Description

The present invention relates to a water hose, in particular intended for use in gardening.

In detail, the invention especially, but not exclusively, relates to an extensible hose.

An extensible garden hose is known including an internal elastic hose, within which water flows and an external extending, flexible and non-elastic, hose, made of fabric.

It is specified that, in the present description, for reasons of illustrative simplicity, the expressions "gardening hose" or "extensible hose" refers to the whole gardening product identified by an assembly formed by two opposite connectors and a linear means for transporting water that connects the two connectors; conversely, when an "internal hose", "external hose", "elastic hose" or "fabric hose" is mentioned, it refers to a component of the aforementioned linear means for transporting water.

At their opposite water ends, the external and internal hoses are clamped to one another through a sleeve fluid dynamically connected to the internal hose and equipped with a threaded shank.

The sleeve shank is then screwed into an adapter element, defining therewith a connector, for example of the female type, to which the tap is connected for dispensing water or a spray gun, etc...

A first drawback of the known connector is that, not infrequently, during the step of screwing the clamping sleeve to the adaptor, the fabric of the external hose gets stuck between the thread of the shank and that of the adapter.

Because of this circumstance, over time, the external hose gets frayed, with a drop in performance, which leads to a rather short product lifetime.

Furthermore, the fraying of the fabric hose has a negative effect on the appearance of the product and causes lower effectiveness in sales, all to the detriment of the efficiency of the investments made by retailers of known extensible hoses.

Another disadvantage of the known connector consists of the fact that, when screwing, some users turn the threaded sleeve to engage it with the adapter, hence twisting the hoses, creating in the internal hose areas of reduced operating effectiveness and greater structural weakness.

US2015308590 discloses a retractable pipe structure including an inner tube and an outer tube, joined at the end by means of a threaded connector. One end of the inner tube is put on a connection portion of said connector and a resilient tightening unit is inserted in that end so a as to join it to the connection portion. Moreover, an end of the external tube is put on the resilient tightening unit and a restricting ring is closed onto that end so as to clamp the same end onto the tightening unit.

WO2016128940 describes an extensible hose provided with two elastically extendable tubular elements joined together at a multiplicity of points, so as to define several internal air chambers. An end of the double elastically extendable tubular element is inserted into a fitting and blocked by means of the functional cooperation between internal flexible fins of the fitting and an outside ring nut.

US2013087205 discloses an extensible hose formed by two coaxial tubes the ends of which are clamped one onto the other, by means of clamping members, so as to block them at a treated connector.

The technical task underlying the present invention is therefore to provide an assembly for irrigation which obviates the drawbacks of the prior art. This technical task is attained by the assembly realised according to claim 1.

Further characteristics and advantages of the present invention will become more apparent from the following indicative, and hence non-limiting, description of preferred, but not exclusive, embodiments of the hose of the invention, as illustrated in the accompanying drawings, in which:
- figure 1 is an axonometric exploded view of a longitudinal section of a first embodiment of the proposed gardening hose;
- figure 2 is a lateral, partially longitudinal section and partly schematic, view of the hose of figure 1;
- figure 3 is the detail K of figure 2, enlarged;
- figure 4 is an axonometric exploded view of a longitudinal section of a second embodiment of the proposed gardening hose;
- figure 5 is a lateral, partially longitudinal section and partly schematic, view of the hose of figure 4; and
- figure 6 is the detail J of figure 5, enlarged.

With reference to the mentioned figures, 1 and 10 indicate a perfected water hose, especially but not exclusively intended for gardening.

Obviously, the hose 1, 10 proposed, as well as for garden surface irrigation, can also be used for washing a car or for watering plants in pots, etc...

In the language of the present description, the water hose 1, 10, as a whole, will also be called "assembly for irrigation", so as to underline that it is an overall product formed by actual hoses and by one or more connectors.

The assembly 1, 10 according to the invention may comprise a so-called extensible hose in the meaning illustrated in the description of the prior art. The assembly 1, 10 proposed is provided with two hoses 2, 3 inserted inside each other, so as to be substantially coaxial.

Preferably, the internal hose 2 is made of elastic material, for example of the polymeric type and the means with which the water is transported from one end to the other of the assembly 1, 10.

The internal hose is inserted in the external hose 3, the latter being able to be extending, flexible, non-elastic and, preferably, made of fabric.

Preferably, the external hose 3 has the function of protecting the internal hose 2 from cuts, scratches or other types of damage and limiting any excessive increase of the external diameter, i.e. limiting its swelling.

The water hose 1, 10 has a shorter non-use configuration wherein the internal elastic hose 2 is resting and the external hose 3 has an undulated (or bunched) form on its longitudinal extension.

When the water hose 1, 10 according to the invention is connected to a water source, the internal elastic hose 2 starts to extend and the external hose 3 to stretch out in various extended use configurations, until a maximum length.

However, since the invention may envisage hoses of a different kind from those described above, the more general expressions "first hose" 2 and "second hose" 3 shall be used below.

The first hose 2 may therefore be the internal hose and the second hose 3 may be the external hose, fitted onto the first hose 2.

According to an important aspect of the invention, the assembly 1, 10 comprises at least one irrigation connector 4, 5, 50 which in turn comprises an attachment unit 4 adapted for the removable connection with irrigation tools or water dispensers.

Preferably, the assembly 1, 10 comprises two connectors 4, 5, 50 arranged on its opposite longitudinal ends between which the first and the second hose 3 unwind.

The attachment unit 4 is hollow and it is provided with an internal conduit 41 for water, placed in fluid communication with the first hose 2.

The attachment unit 4 can be made of plastic material, for example rigid, semi-rigid, or other materials.

In detail, the internal conduit 41 of the attachment unit 4 enables water to enter or exit from the assembly 1, 10, said water being transported from one connector 4, 5, 50 to the other inside the first hose 2.

In other words, the conduit 41 leads outside into an attachment mouth 42 and therefore allows the first hose 2 to be placed in fluid dynamic communication with a tool connected to the attachment, such as a water gun, or with a water source, such as a tap or the like.

The attachment mouth 42 can be for example central and placed at the free end wall of the attachment unit 4.

The aforementioned internal conduit 41 can be a central circular volume that extends in the direction of the length of the attachment unit 4.

Further examples, and non-limiting, constructional aspects of the attachment unit 4 will be illustrated below after the methods with which the proposed connector 4, 5, 50 is associated with the two hoses 2, 3, in order to overcome the drawbacks of the prior art, have been described.

In the appended figures, two particular not exclusive embodiments of the assembly 1, 10, being distinguished from each other due to some constructional aspects of the connector 4, 5, 50. The first embodiment is not part of the invention.

In detail, two versions of the connector 4, 5, 50 are envisaged, which have different parts in common that are described below.

The connector 4, 5, 50 of the invention is preferably axial symmetric and receives internally at least one section of the first hose 2, comprising an end thereof.

The connector 4, 50, 5 comprises a first connection element 43 for coupling an end of the first hose 2 to the attachment unit 4, to allow fluid communication between the first hose 2 and the aforementioned conduit 41.

The end of a hose 2, 3 means one of its two opposite end portions that include a respective final edge, where the inlet / outlet opening to the internal volume is defined.

In particular, the first connection element includes a sleeve 43 equipped with a full length axial cavity, which communicates with the aforementioned conduit 41.

In even more detail, the sleeve 43 is inserted, preferably with interference, into the end of the first hose 2.

In order to have a better grip with the first hose 2, the sleeve 43 of the first element may be appropriately shaped and have a variable section along its longitudinal extension.

For example, the sleeve 43 of the first element may comprise a cylindrical stalk 430 that extends axially from the attachment unit 4 and ends in a free end 431 with a larger conoid or ogival shaped section.

According to a variant not shown, the sleeve receives the first hose 2 internally; however, the version is preferable wherein the sleeve 43, which is more rigid, is inserted into the first hose 2, which is softer.

The invention may include a first joining means 44 for locking the first hose 2 to the first connection element 43.

Preferably, the first joining means comprises a clamping element 44, preferably annular, adapted to tighten the first hose 2 onto the sleeve 43 of the first element.

The clamping element may be a metal bush 44 and, between the bush and the external surface of the first hose 2, an intermediate protection element may be fitted.

The protection element may be made of soft material (fabric, soft plastic, ..) and is used to prevent potential lesions to the hose by the bush.

Embodiments are not excluded in which the first hose 2 is glued to the first connection element 43 or is fixed via ultrasonic welding or another method suitable for the purpose.

The connector 4, 5, 50 then comprises a second connection element 51, 52 coupled to one end of the second hose 3.

The second connection element 51, 52 is distinguished and separated from the first element 43.

According to the invention, common to both of the embodiments shown, the second connection element 51, 52 is interposed between the first and the second hose 3, separating the end of the first hose 2, engaged to the first connection element 43, from the end of the second hose 3, engaged with the second element 51, 52.

The two internal and external hoses are not joined to one another through an element that must be screwed inside an adaptor therefore it is not possible for the external hose to get stuck in the thread or for the internal hose to get twisted.

Furthermore, the invention also offers advantages with respect to the prior art, which will become clear after further constructional and functional aspects of the proposed assembly 1, 10 have been illustrated.

In both of the embodiments depicted, the second element also comprises its own sleeve 51, 52; in this case, such sleeve 51, 52 is adapted to be inserted into the end of the second hose 3.

The alternative, non preferential, variant may also be provided, wherein the sleeve of the second connection element receives internally the second hose 3.

Furthermore, the invention may be equipped with a second joining means 53 for locking the second hose 3 to the second connection element, which may be of the type of the first joining means 44 described in detail above.

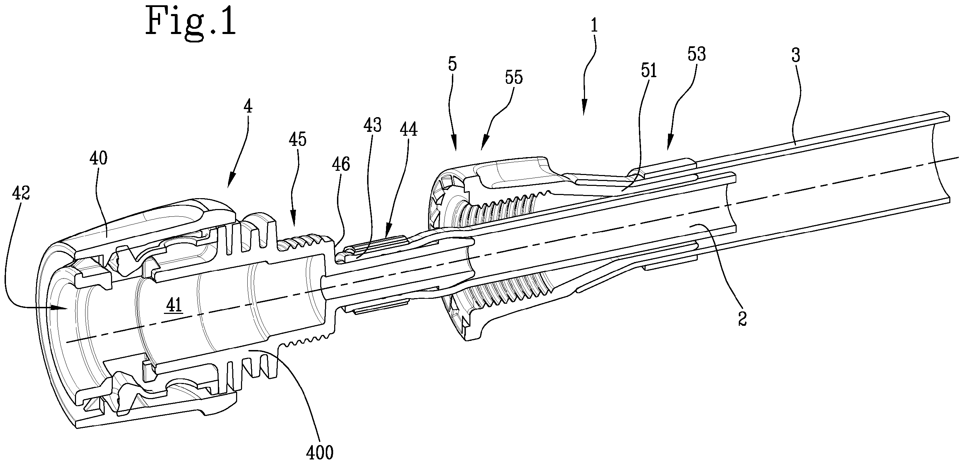

In the examples shown in the appended tables of drawings, this second joining means 53 is present in one of the two particular embodiments of the invention, i.e. in the one represented in figures 1 - 3.

In any case, embodiments are not excluded in which the second hose 3 is glued to the second connection element 51, 52 or is fixed via ultrasonic welding or other methods.

In both the embodiments, the connector 4, 5, 50 may include a first external body 5, 54 having a substantially annular, and preferably axial symmetric, shape, removably coupled to the attachment unit 4.

Such first body 5, 54 may be made of plastic material, for example rigid or semi-rigid.

It is to be noted that in both the embodiments, the first body 5, 54 circumscribes at least one part of the first hose 2 and, in one of the embodiments described herein, also a part of the second hose 3.

To be precise, the attachment unit 4 includes an annular threaded portion 45 on which a threaded washer 55, 56 is engaged included in the first body 5, 54.

In even more detail, the sleeve 43 of the first element can constitute an axial extension of the annular threaded portion 45.

In practice, the attachment unit 4 can provide a projecting shank 43, 45, which extends in the opposite direction to the aforementioned attachment mouth 42 and conforms, in sequence, both the threaded portion 45 and the sleeve that engages the first hose 2.

In this case, the sleeve 43 is coaxial to the threaded portion 45 and thinner, defining an annular transversal surface 46 at the most external end of the threaded portion 45; more detail will be provided below on this annular surface 46.

Therefore, the first body 5, 54 comprises an internally threaded washer 55, 56 to which access is from an opening facing towards the mentioned shank 43, 45 of the attachment unit 4.

In the embodiment shown in figures 1, 2 and 3, the first body 5 comprises the second connection element 51.

To be exact, such first body 5 can conform, at one end, the washer 55 and, at the other end, the aforementioned sleeve 51 of the second element.

In this case, the washer 55 and the sleeve 51 are realised as one piece in the first annular body 5, with the washer 55 which defines its closest section to the attachment unit 4 and the sleeve 51 which is instead comprised in a more distant section.

The sleeve 51 of the second element may be tapered moving away from the washer 55.

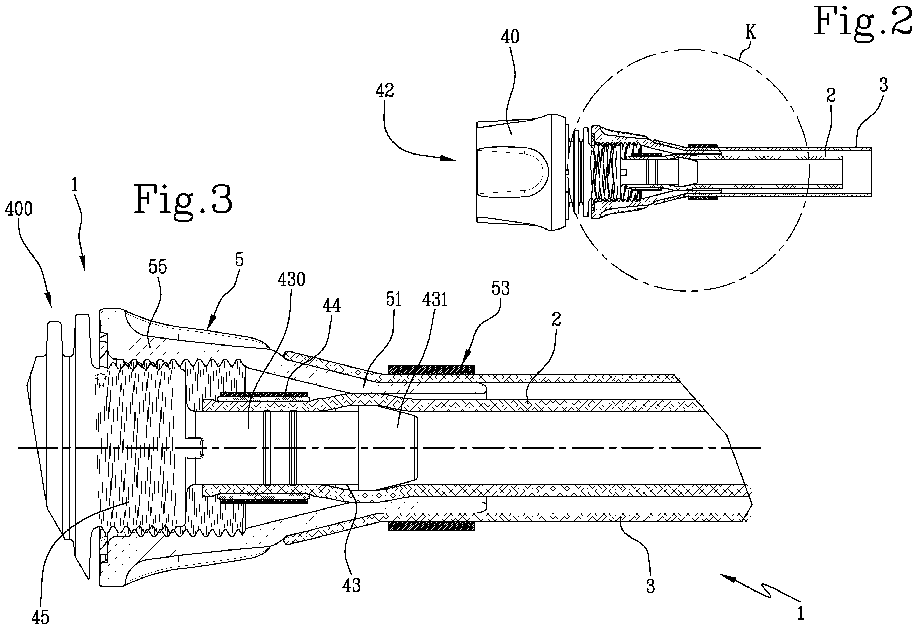

In this embodiment, as can be seen in figure 3, the first body 5 surrounds the first hose 2 for a certain portion of the length of the latter.

The second hose 3 is fitted outside the first body 5 and, for a portion of its length, is separate from the first hose 2.

It is therefore clear that when the washer 55 is screwed onto the attachment unit 4, it is not possible for the second hose 3 to get stuck in the threads and the first hose 2 certainly does not get twisted.

A particular advantage of the configuration of the invention is that the first hose 2 can be easily inspected simply by unscrewing the washer 55 and separating the first body 5 and the attachment unit 4 so as to be able to repair any damage, in the same way as the inner tube of a bicycle tyre.

This result cannot be reached in any way with the solution of the prior art.

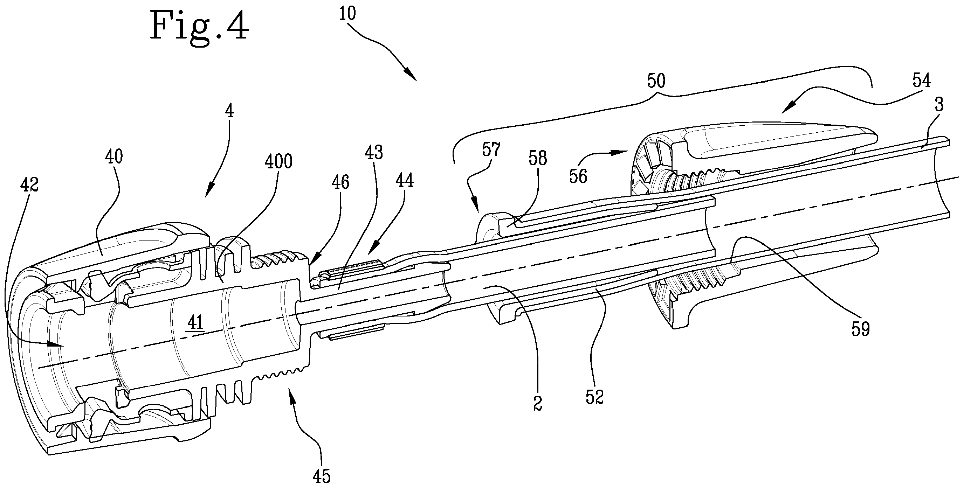

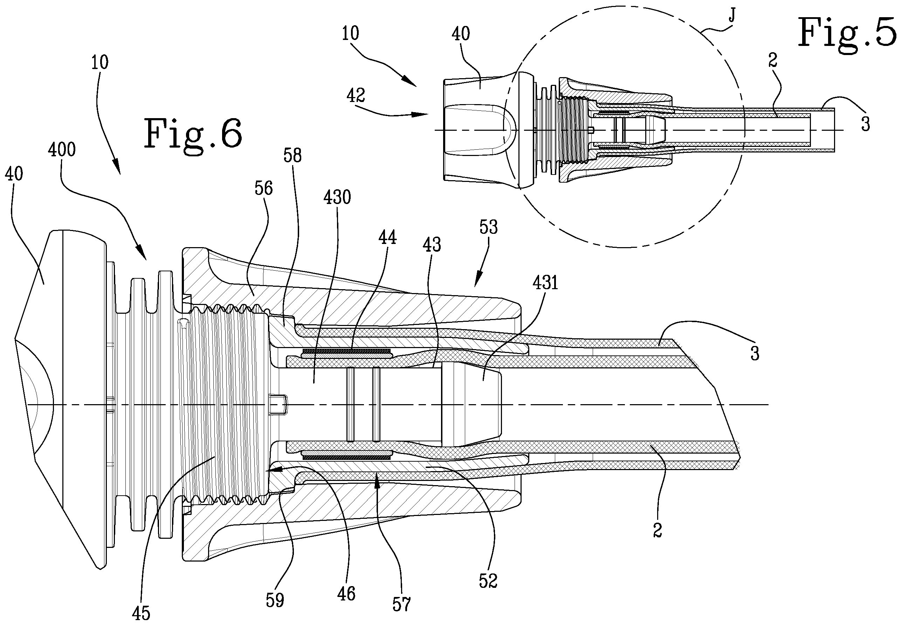

In the second embodiment, shown in figures 4, 5, 6, the connector 4, 50 includes a second body 57 having a substantially annular shape that comprises the second element 52.

Such second body 57 is placed inside the first body 54 and is made of rigid or semi-rigid plastic material.

The second internal body 57 surrounds the first hose 2, in its engagement area with the sleeve 43 of the first element, and is in turn surrounded by the first body 54.

In practice, in this embodiment, the first and the second body together define a joining unit 50, which allows the end of the second hose 3 to be removably joined to the attachment unit 4, as well as providing the benefits detailed below.

Again, along a respective end section, the first and the second hose 2, 3 are separate from one another.

The second body 57 comprises an end shoulder 58 that abuts against the aforementioned annular surface 46 of the shank of the attachment unit 4, defined between the threaded portion 45 and the engagement sleeve 43 to the first hose 2.

Moving away from the shoulder 58, the second body 57 may conform the engagement sleeve 52 to the second hose 3 which is tapered towards its end.

The first body 54 is adapted to press on the second body 57, following the screwing of the washer 55, 56 onto the threaded portion 45 of the attachment unit 4, to allow the shoulder 58 to be automatically brought into abutment with the annular surface 46 and to lock everything in position.

For that purpose, the first body 54 comprises its own internal abutment shoulder 59, afforded adjacent or in proximity to the internal thread, intended to come into contact and to push the shoulder 58 of the second internal body 57, during the screwing step.

As well as offering the advantages of the second hose 3 not fraying and the first hose 2 not getting twisted, as already illustrated, this second embodiment of the invention has further benefits.

In fact, the second internal body 57 contrasts the negative effects of possible overpressure that could occur in the end part of the first hose 2 where the effort suffered is greater.

Furthermore, since the first hose 2 is fitted already stretched onto such second internal body 57, the screwing of the washer 55, 56 of the first external body 54 is certainly facilitated.

According to an optional aspect which may be common to both embodiments, the attachment unit 4 comprises a third body 400, preferably axial symmetric, inside which the aforementioned conduit 41 is defined and which also conforms the aforementioned shank 43, 45; this third body 400 may also be made of plastic material, preferably semi-rigid. An external ring 40 may be fitted onto the third body 400, through a snap coupling, said ring 40 defining outside an external grip surface.

## Claims

1. An assembly (10) for irrigation, comprising a first and a second hose (2, 3) and comprising at least one connector (4, 50) equipped with an attachment unit (4) adapted for the removable connection with tools for irrigation or water dispensers, said connector (4, 50) comprising:
a first connection element (43) coupled to an end of the first hose (2); and
a second connection element (52), distinct from said first element (43) and coupled to an end of a second hose (3); wherein the connector (4, 50) includes a first external body (54) having a substantially annular shape and being removably coupled to the attachment unit (4); wherein the connector (4, 50) includes a second body (57) having a substantially annular shape that comprises the second connection element (52), placed inside the first body (54);
wherein said attachment unit (4) is hollow and is provided with an internal conduit (41) for water, which is placed in fluid communication with the first hose (2) and leads outside into an attachment mouth (42);
wherein said first connection element (43) includes a sleeve (43) adapted to be inserted into the end of the first hose (2) and placed in fluid connection with a conduit (41) internal to the attachment unit (4); wherein the attachment unit (4) includes an annular threaded portion (45) and the sleeve (43) of the first connection element (43) constitutes an axial extension of the annular threaded portion (45);
wherein said attachment unit (4) provides a projecting shank (43, 45) which extends in a opposite direction to said attachment mouth (42) and conforms, in sequence, both the threaded portion (45) and the sleeve (43) that engages the first hose (2);
wherein the sleeve (43) of the first connection element is coaxial to the threaded portion (45) and thinner, defining an annular transversal surface (46) at a most external end of the threaded portion (45);
wherein said attachment unit (4) includes a threaded portion (45) on which a threaded washer (56) is engaged, which is comprised in said first body (54);
wherein the second body (57) is made of rigid or semi-rigid plastic material; the second connection element (52) being interposed between the first and the second hose (2, 3), separating said end of the first hose (2) from said end of the second hose (3);
**characterized in that** the second body (57) comprises a sleeve (52), which is adapted to be inserted into the end of the second hose (3) and comprises an end shoulder (58) that abuts against said annular surface (46) of the shank of the attachment unit (4), defined between the threaded portion (45) and the engagement sleeve (43) to the first hose (2);
the first body (54) comprising an internal abutment shoulder (59), afforded adjacent or in proximity to an internal thread (56), intended to come into contact and to push the shoulder (58) of the second internal body (57), during a screwing step.

2. The assembly (10) according to claim 1, comprising a first joining means (44) for locking the first hose (2) to the first connection element (43).

3. The assembly (10) according to the preceding claim, wherein said first joining means comprises a clamping element (44) adapted to tighten the first hose (2) onto the sleeve of the aforementioned first element.

4. The assembly (10) according to claim 1, wherein said first body (54) is adapted to press on said second body (57), following the screwing of said washer (56) onto the threaded portion (45).

5. The assembly (10) according to at least one of the preceding claims, wherein the first hose (2) is inserted into the second hose (3).

6. The assembly (10) according to the preceding claim, wherein the first hose (2) is made of elastic material and is designed to transport water and the second hose (3) is flexible, not elastic and is adapted to protect the first hose (2) and to limit an increase in its outer diameter.

## Patentansprüche

1. Anordnung (10) für die Bewässerung, umfassend einen ersten und einen zweiten Schlauch (2, 3) und mindestens einen Verbinder (4, 50), der mit einer Anschlusseinheit (4) ausgestattet ist, die für die abnehmbare Verbindung mit Bewässerungswerkzeugen oder Wasserspendern ausgelegt ist, wobei der Verbinder (4, 50) umfasst: ein erstes Verbindungselement (43), das mit einem Ende des ersten Schlauchs (2) gekoppelt ist; und ein zweites Verbindungselement (52), das sich vom ersten Element (43) unterscheidet und mit einem Ende eines zweiten Schlauchs (3) gekoppelt ist; wobei der Verbinder (4, 50) einen ersten Außenkörper (54) einschließt, der im Wesentlichen ringförmig ausgebildet ist und abnehmbar mit der Anschlusseinheit (4) gekoppelt ist; wobei der Verbinder (4, 50) einen zweiten Körper (57) einschließt, der im Wesentlichen ringförmig ausgebildet ist, der das zweite Verbindungselement (52) umfasst, das im ersten Körper (54) platziert ist;
wobei die Anschlusseinheit (4) hohl ist und mit einer inneren Leitung (41) für Wasser versehen ist, die in Fluidverbindung mit dem ersten Schlauch (2) gebracht ist und nach außen in eine Anschlussmündung (42) führt;
wobei das erste Verbindungselement (43) eine Hülse (43) einschließt, die dazu eingerichtet ist, um in das Ende des ersten Schlauchs (2) eingefügt und in Fluidverbindung mit einer Leitung (41) in der Anschlusseinheit (4) gebracht zu werden;
wobei die Anschlusseinheit (4) einen ringförmigen Gewindeabschnitt (45) einschließt und die Hülse (43) des ersten Verbindungselements (43) eine axiale Verlängerung des ringförmigen Gewindeabschnitts (45) darstellt;
wobei die Anschlusseinheit (4) einen vorstehenden Schaft (43, 45) vorsieht, der sich in einer entgegengesetzten Richtung zur Anschlussmündung (42) erstreckt und sich nacheinander sowohl an den Gewindeabschnitt (45) als auch an die Hülse (43) anpasst, die in den erste Schlauch (2) eingreift;
wobei die Hülse (43) des ersten Verbindungselements koaxial zu dem Gewindeabschnitt (45) und dünner ist und dabei eine ringförmige Querfläche (46) an einem äußersten Ende des Gewindeabschnitts (45) definiert;
wobei die Anschlusseinheit (4) einen Gewindeabschnitt (45) einschließt, in den eine Gewindescheibe (56) eingreift, die im ersten Körper (54) enthalten ist;
wobei der zweite Körper (57) aus steifem oder halbsteifem Kunststoffmaterial besteht; wobei das zweite Verbindungselement (52) zwischen dem ersten und dem zweiten Schlauch (2, 3) angeordnet ist und dabei das Ende des ersten Schlauchs (2) vom Ende des zweiten Schlauchs (3) trennt;
**dadurch gekennzeichnet, dass** der zweite Körper (57) eine Hülse (52) umfasst, die dazu eingerichtet ist, um in das Ende des zweiten Schlauchs (3) eingefügt zu werden und eine Endschulter (58) umfasst, die an der ringförmigen Fläche (46) des Schaftes der Anschlusseinheit (4) anliegt, die zwischen dem Gewindeabschnitt (45) und der Eingriffshülse (43) am ersten Schlauch (2) definiert ist;
wobei der erste Körper (54) eine innere Anlageschulter (59) umfasst,
die neben oder in der Nähe eines Innengewindes (56) ausgebildet ist, das dazu bestimmt ist, während eines Schraubschrittes mit der Schulter (58) des zweiten Innenkörpers (57) in Kontakt zu kommen und diese zu drücken.

2. Anordnung (10) nach Anspruch 1, umfassend erste Zusammenfügungsmittel (44) zum Verriegeln des ersten Schlauchs (2) am ersten Verbindungselement (43).

3. Anordnung (10) nach dem vorhergehenden Anspruch, wobei die ersten Zusammenfügungsmittel ein Klemmelement (44) umfassen, das dazu eingerichtet ist, den ersten Schlauch (2) an der Hülse des oben genannten ersten Elements festzuziehen.

4. Anordnung (10) nach Anspruch 1, wobei der erste Körper (54) dazu eingerichtet ist, um nach dem Schrauben der Scheibe (56) auf den Gewindeabschnitt (45) auf den zweiten Körper (57) zu drücken.

5. Anordnung (10) nach mindestens einem der vorhergehenden Ansprüche, wobei der erste Schlauch (2) in den zweiten Schlauch (3) eingefügt ist.

6. Anordnung (10) nach dem vorhergehenden Anspruch, wobei der erste Schlauch (2) aus elastischem Material besteht und ausgestaltet ist, um Wasser zu transportieren und der zweite Schlauch (3) flexibel, nicht elastisch ist und dazu eingerichtet ist, den ersten Schlauch ( 2) zu schützen und eine Vergrößerung seines Außendurchmessers zu begrenzen.

## Revendications

1. Assemblage (10) pour irrigation, comprenant un premier et un second tuyau (2, 3) et comprenant au moins un connecteur (4, 50) équipé d'une unité de fixation (4) adaptée pour la connexion amovible avec des outils pour l'irrigation ou des distributeurs d'eau, ledit connecteur (4, 50) comprenant : un premier élément de connexion (43) couplé à une extrémité du premier tuyau (2) ; et un second élément de connexion (52), distinct dudit premier élément (43) et couplé à une extrémité d'un second tuyau (3) ; dans lequel le connecteur (4, 50) inclut un premier corps externe (54) ayant une forme substantiellement annulaire et étant couplé de manière amovible à l'unité de fixation (4) ; dans lequel le connecteur (4, 50) inclut un second corps (57) ayant une forme substantiellement annulaire qui comprend le second élément de connexion (52), placé à l'intérieur du premier corps (54) ;
dans lequel ladite unité de fixation (4) est creuse et est pourvue d'un conduit interne (41) pour l'eau, qui est placé en communication fluidique avec le premier tuyau (2) et mène à l'extérieur dans une bouche de fixation (42) ;
dans lequel ledit premier élément de connexion (43) inclut un manchon (43) adapté pour être inséré dans l'extrémité du premier tuyau (2) et placé en connexion fluidique avec un conduit (41) interne à l'unité de fixation (4) ;
dans lequel l'unité de fixation (4) inclut une portion filetée annulaire (45) et le manchon (43) du premier élément de connexion (43) constitue une extension axiale de la portion filetée annulaire (45) ;
dans lequel ladite unité de fixation (4) fournit une tige saillante (43, 45) qui s'étend dans une direction opposée à ladite bouche de fixation (42) et s'adapte, dans l'ordre, à la fois à la portion filetée (45) et au manchon (43) qui s'engage dans le premier tuyau (2) ;
dans lequel le manchon (43) du premier élément de connexion est coaxial à la portion filetée (45) et plus mince, définissant une surface transversale annulaire (46) à une extrémité la plus externe de la portion filetée (45) ;
dans lequel ladite unité de fixation (4) inclut une portion filetée (45) sur laquelle une rondelle filetée (56) est engagée, qui est comprise dans ledit premier corps (54) ;
dans lequel le deuxième corps (57) est en matière plastique rigide ou semi-rigide ; le deuxième élément de connexion (52) étant interposé entre le premier et le deuxième tuyau (2, 3), séparant ladite extrémité du premier tuyau (2) de ladite extrémité du deuxième tuyau (3) ;
**caractérisé en ce que** le deuxième corps (57) comprend un manchon (52), qui est adapté pour être inséré dans l'extrémité du deuxième tuyau (3) et comprend un épaulement d'extrémité (58) qui vient en butée contre ladite surface annulaire (46) de la tige de l'unité de fixation (4), définie entre la portion filetée (45) et le manchon d'engagement (43) sur le premier tuyau (2) ;
le premier corps (54) comprenant un épaulement de butée interne (59),
prévu adjacent ou à proximité d'un filetage interne (56), destiné à venir en contact et à pousser l'épaulement (58) du deuxième corps interne (57), lors d'une étape de visser.

2. Assemblage (10) selon la revendication 1, comprenant des premiers moyens de jonction (44) pour verrouiller le premier tuyau (2) au premier élément de connexion (43).

3. Assemblage (10) selon la revendication précédente, dans lequel lesdits premiers moyens de jonction comprennent un élément de serrage (44) adapté pour serrer le premier tuyau (2) sur le manchon du premier élément susmentionné.

4. Assemblage (10) selon la revendication 1, dans lequel ledit premier corps (54) est adapté pour appuyer sur ledit second corps (57), suite au vissage de ladite rondelle (56) sur la portion filetée (45).

5. Assemblage (10) selon au moins l'une des revendications précédentes, dans lequel le premier tuyau (2) est inséré dans le second tuyau (3).

6. Assemblage (10) selon la revendication précédente, dans lequel le premier tuyau (2) est fait d'un matériau élastique et est conçu pour transporter de l'eau et le second tuyau (3) est flexible, non élastique et est adapté pour protéger le premier tuyau (2) et pour limiter une augmentation de son diamètre extérieur.
